# EUROPEAN PATENT APPLICATION

(11) **EP 4 715 797 A1**
(43) Date of publication of application: **25.03.2026**
(21) Application number: 25197684.1
(22) Date of filing: 22.08.2025
(51) Int. Cl.: G09G 5/00, G09G 5/12, G09G 5/18

(54) **INFORMATION PROCESSING SYSTEM, INFORMATION PROCESSING METHOD, AND A PROGRAM**

(30) Priority: 20.09.2024 JP 2024163303
(71) Applicant: Nintendo Co., Ltd., Kyoto 601-8501 (JP)
(72) Inventor: TSUKAHARA, Yuki, Kyoto, 601-8501 (JP)
(74) Representative: Bardehle Pagenberg Partnerschaft mbB Patentanwälte Rechtsanwälte

(57) **Abstract**

An information processing system that can appropriately execute application-related processing and system processing is provided. The information processing system includes an application execution unit 13 that executes an application program, an image generation unit 14 that generates images, and an image output unit 15 that outputs images generated by the image generation unit 14 to an LCD screen 17. The image generation unit 14 sequentially executes system processing and application-related processing, which includes application rendering processing based on the execution results by the application execution unit 13, within a unit period. The information processing system interrupts the application-related processing based on the fact that the second processing has not been completed within the unit period, the information processing system executes the system processing and the continuation of the interrupted application-related processing sequentially within the next unit period. The image output unit 15 outputs the image to the liquid crystal display without waiting for the unit period to expire, based on the completion of the system processing and the application-related processing.

## Description

### Technical Field

The present disclosure relates to technology for executing an application, including an information processing system, an information processing method, and a program.

### Background Art

Conventionally, an information processing device has been known that includes a processing unit that performs system software execution and communication processing with a server, as well as image generation processing by an application (see, for example, Japanese Patent Laid-Open Application No. 2018-10688).

### Summary of Invention

### Technical Problem

In the information processing device described above, there was room for improvement in system processing by the processing unit and the scheduling of application processing.

According to the present disclosure, an information processing system is provided that can appropriately execute application processing and processing different from the application processing.

### Solution to Problem

### (Configuration 1)

The information processing system of configuration 1, comprises: a memory configured to store an application program, and at least one processor configured to execute the application program to perform operations comprising:
generating an image, the image generation including: sequentially performing, within a first unit period, (i) first processing based on processing data at a first timing, and (ii) second processing including application rendering processing based on execution of the application program; and interrupting the second processing based on the second processing being incomplete within the first unit period, and sequentially performing (i) the first processing based on the processing data at a second timing later than the first timing, and (ii) continuing the interrupted second processing within a second unit period following the first unit period; and outputting the generated image to a display screen without waiting for the expiration of the unit period, based on at least the second processing being completed.

### (Configuration 2)

In the information processing system of configuration 1, the processing data is updated based on execution results of system processing different from the application program; the first processing may include system rendering processing corresponding to the results of the system processing; and outputting the generated image to the display screen without waiting for the expiration of the unit period, based on both the system rendering processing and the second processing being completed.

### (Configuration 3)

The information processing system of configuration 2 may include an information processing device that is capable of communicating with other information processing devices and that has the display screen; the at least one processor configured to execute the application program to perform operations may comprise: performing the first processing including transmission processing; and transmitting information based on the execution of the transmission processing to the other information processing device; wherein an image based on the execution of the transmission processing is not output to the display screen of the information processing system, but may be output to the display screen of the other information processing devices.

### (Configuration 4)

In any of the information processing systems of configurations 1 to 3, the first processing may be performed before the second processing in the unit period.

### (Configuration 5)

In the information processing system of configuration 4, the second processing may be configured not to be performed until a predetermined time has elapsed since the start of the execution of the first processing.

### (Configuration 6)

In the information processing system of configuration 4, the first processing may be completed when either a processing completion condition is satisfied or a predetermined time has elapsed since the start of the execution of the first processing; and the second processing may be executed without waiting for the predetermined time to elapse, based on the first processing being completed by the satisfaction of the processing completion condition.

### (Configuration 7)

In any of the information processing systems of configurations 1 to 6, a length of the unit period may be determined according to the application program executed.

### (Configuration 8)

Any of the information processing systems of configurations 1 to 7 may include an information processing device and a display device; the information processing device includes the application execution unit, the image generation unit, and the image output unit; and the display device includes the display screen.

### (Configuration 9)

An information processing method of configuration 9 is an information processing method in an information processing system including an application execution unit that executes an application program, an image generation unit that generates an image, and an image output unit that outputs the image generated by the image generation unit to a display screen, the information processing method comprising: sequentially performing, by the image generation unit within a first unit period, (i) first processing based on processing data at a first timing, and (ii) second processing including an application rendering processing based on execution results by the application execution unit; interrupting the second processing, based on the second processing being incomplete within the first unit period and sequentially performing, within a second unit period following the first unit period, (i) the first processing based on processing data at a second timing later than the first timing, and (ii) continuing the interrupted second processing; and outputting the image to the display screen by the image output unit, based on at least the second processing being completed, without waiting for the expiration of the unit period.

### (Configuration 10)

A program of configuration 10 is the program to be executed by an information processing system comprising an application execution unit that executes an application program, an image generation unit that generates an image, and an image output unit that outputs the image generated by the image generation unit to a display screen, the program causing the information processing system to: sequentially perform, by the image generation unit within a first unit period, (i) first processing based on processing data at a first timing, and (ii) second processing including an application rendering processing based on execution results by the application execution unit; interrupt the second processing, based on the second processing being incomplete within the first unit period and sequentially perform, within a second unit period following the first unit period, (i) the first processing based on processing data corresponding to a second timing later than the first timing, and (ii) continuing the interrupted second processing; and output the image to the display screen by the image output unit, based on at least the second processing being completed, without waiting for the expiration of the unit period.

The foregoing and other objects, features, aspects and advantages of the exemplary embodiments will become more apparent from the following detailed description of the exemplary embodiments when taken in conjunction with the accompanying drawings.

### Brief Description of Drawings

Figure 1 is a diagram showing the configuration of the information processing system of a first embodiment.
Figure 2 is a diagram showing an example of scheduling.
Figure 3 is a diagram showing an example of processing when the application rendering processing is completed before the end of the unit period.
Figure 4 is a diagram showing an example of processing when the application rendering processing is completed before the end of the unit period.
Figure 5 is a diagram showing an example of processing when the application rendering processing is not completed within the unit period.
Figure 6 is a diagram showing an example of processing when the application rendering processing is not completed within the unit period.
Figure 7 is a flowchart showing the processing flow of a game apparatus.
Figure 8 is a diagram showing the configuration of the information processing system of the second embodiment.
Figure 9 is a diagram showing the configuration of the information processing system of the third embodiment.
Figure 10 is a diagram showing the scheduling in the information processing system of a modified example.

### Description of Embodiments

An information processing system of embodiments will now be described with reference to the drawings. The following description is merely an example of a preferred mode and is not intended to limit the scope of the invention in the claims.

### (First Embodiment)

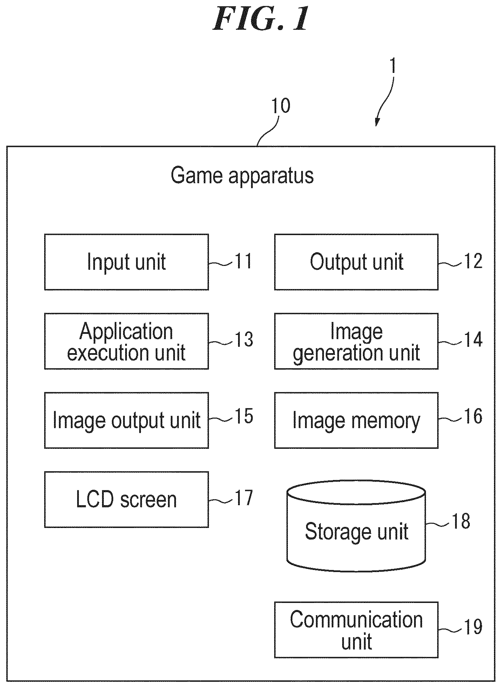

Figure 1 is a diagram showing the configuration of the information processing system 1 of the first embodiment. The information processing system 1 of the first embodiment is a game apparatus 10. The game apparatus 10 includes an input unit 11, an output unit 12, an application execution unit 13, an image generation unit 14, an image output unit 15, an image memory 16, a LCD screen 17, a storage unit 18, and a communication unit 19.

The input unit 11 has a function of receiving input to the game apparatus 10 based on user operation. The input unit 11 is, for example, a touch panel, buttons, and analog sticks, etc. The output unit 12 has a function of outputting the results of game processing to the user. The output unit 12 is, for example, a speaker, a haptic device, and a display, etc. Note that in Figure 1, the LCD screen 17, which is one of the output unit 12, is shown separately.

The LCD screen 17 supports a variable refresh rate (hereinafter referred to as "VRR"). Here, the phrase "the LCD screen supports VRR" includes, for example, cases where both the LCD screen and the driver IC controlling the LCD screen support VRR. VRR is a technology that synchronizes the refresh rate of the display with the frame rate generated by the graphics card or game apparatus 10. This reduces visual artifacts such as tearing and stuttering, providing a smooth and comfortable viewing experience.

The application execution unit 13 reads a game program (the game application program) from the storage unit 18 and executes the game program. The hardware of the application execution unit 13 is a CPU.

The image generation unit 14 performs rendering processing (application rendering processing) of 3D graphics or 2D graphics, physical calculations, animation calculations, and other processing based on the execution results of the game program by the application execution unit 13. The image generation unit 14 stores the images generated by the rendering processing in the image memory 16. The physical calculations performed by the image generation unit 14 include, for example, collision calculations between objects within the game and calculations to realistically simulate the movement of fluids such as water and smoke.

The hardware of the image generation unit 14 is a GPU. In addition to application-specific processing based on the execution results of the game program, the image generation unit 14 performs system processing based on the execution results of a system different from the game program. System processing includes, for example, rendering processing for the software keyboard, rendering processing for the logo when the application is launched, and rendering processing for pop-ups when notifications are received from other devices.

In addition, system processing includes processing of camera images obtained from the camera for transmission to the game apparatus 30 of the communication partner. Camera image processing includes, for example, processing to render a virtual background and face detection processing. The images processed by the virtual background processing or face detection processing are transmitted to the communication partner's game apparatus 30, where the images are rendered. The rendered images are also displayed on the LCD screen 17 of the game apparatus 10. Note that the data transmitted to the communication partner's game apparatus does not necessarily have to be the image itself; it may also be data used to generate the image. For example, data indicating facial region in the camera image is detected may be transmitted. Additionally, when transmitting an image, the image of the detected face may be transmitted separately from the camera image.

Here, an example is described where the generated camera image is displayed on one's own game apparatus 10, but it is also possible to configure the system such that the image transmitted to the communication partner's game apparatus 30 is not displayed on one's own game apparatus 10.

The image output unit 15 is a device that transmits image data to the LCD screen 17. An example of the image output unit 15 is a display controller. The image output unit 15 transmits the image data stored in the image memory 16 to the LCD screen 17. The image generation unit 14 and the image output unit 15 access the same image memory 16. There is no need to send or receive the image data between the image generation unit 14 and the image output unit 15. Here, multiple buffers can be prepared in the image memory 16, and double buffering or triple buffering may be performed to achieve parallel processing of reading and writing.

The image output unit 15 transmits a frame signal to the LCD screen 17 when the application rendering processing performed by the image generation unit 14 is complete, thereby notifying the LCD screen 17 of the timing for generating a frame. In response, the LCD screen 17 refreshes the screen. Since the LCD screen 17 refreshes the screen in synchronization with the completion of the application rendering, tearing can be prevented.

The scheduling of the processing performed by the image generation unit 14 in the game apparatus 10 of this embodiment is described below. The image generation unit 14 sets a unit period for performing system processing using data necessary for system processing and application-related processing including the application rendering processing.

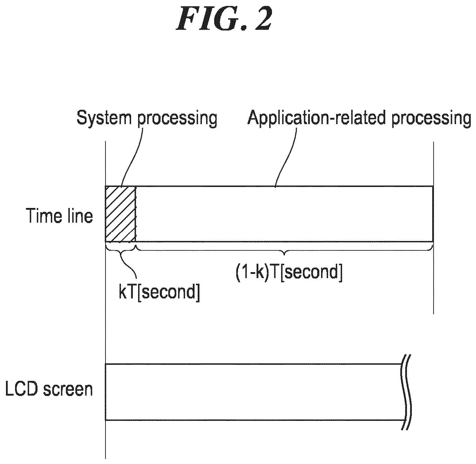

Figure 2 is a diagram showing an example of scheduling. The upper portion shows the timeline of the processing performed by the image generation unit 14, and the lower portion shows the timing of the LCD screen refresh. System processing and application-related processing are each allocated execution time in predetermined proportions. For example, the image generation unit 14 executes system processing and application-related processing within a unit period of T seconds. In this example, kT seconds (0 < k < 1) are spent on system processing, and (1 - k)T seconds are spent on application-related processing.

In this embodiment, processing is executed in the order of system processing and application-related processing within a unit period. That is, system processing is executed at the start of the unit period, and application-related processing is executed when the time allocated to system processing ends. In this embodiment, the start of application-related processing is fixed at the time when the time allocated to system processing ends. In other words, even if system processing completes in less than kT seconds, application-related processing begins kT seconds after the start of the unit period. This ensures that the time available for application-related processing within the unit period (in the example of Figure 2, (1-k)T seconds) remains constant.

The length of the unit period can be selected by the game program based on an estimation of the rendering processing load. For example, the length of the unit period can be 1/60 second, 1/30 second, or 1/120 second, and the game program can select an appropriate length for the unit period from among these options. For example, the unit period can be set longer when the rendering processing load is estimated to be heavy, and shorter when the rendering processing load is estimated to be light. The length of the unit period may also be set manually by the user.

In the game apparatus 10 of this embodiment, the image generation unit 14 performs system processing for a predetermined time (kT seconds in the example of Figure 2) within the unit period. Even if the application-related processing is not completed when the T-second unit period ends, the next unit period starts and system processing is executed. Conversely, if the application-related processing is completed within the unit period, the image generation unit 14 sends a frame signal to the LCD screen 17 without waiting for the end of the unit period, thereby starting the next unit period.

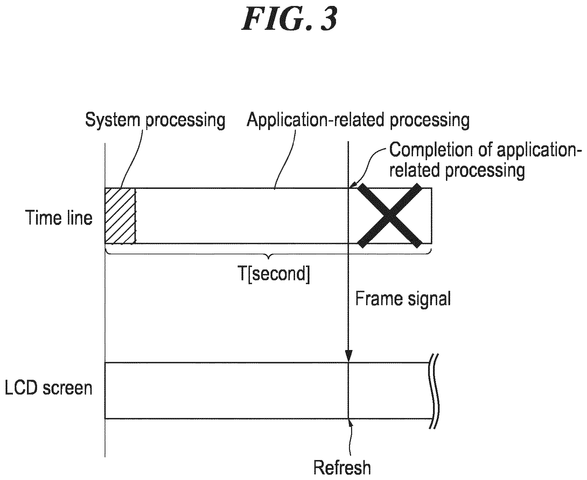

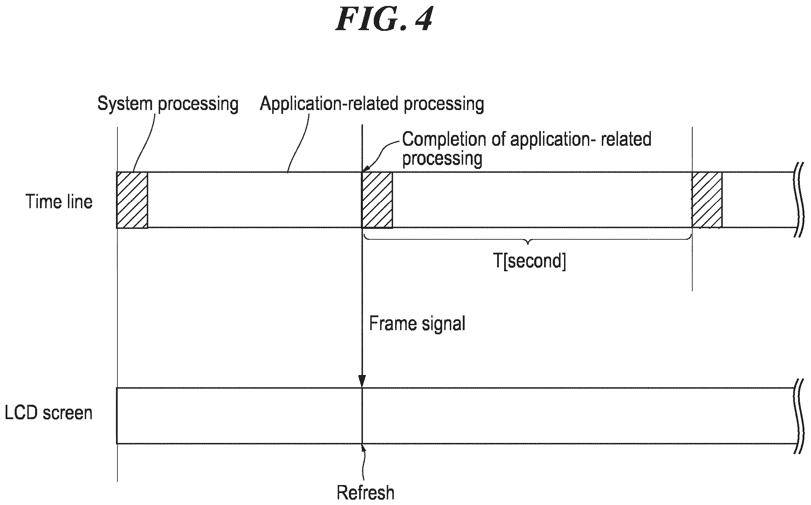

Figures 3 and 4 are examples of processing when the application rendering processing is completed before the end of the unit period. As shown in Figure 3, when the application rendering processing is completed before the end of the unit period, the image generation unit 14 sends a frame signal to the LCD screen 17 without waiting for the unit period to end. As a result, the LCD screen 17 is refreshed, and the image data rendered by the application rendering processing is displayed on the LCD screen 17. Note that when system processing, including system rendering processing, is executed, an image based on the results of the application rendering processing and the system rendering processing is displayed. Figure 4 is a diagram showing the processing following Figure 3. As shown in Figure 4, after sending the frame signal, the image generation unit 14 starts a new unit period.

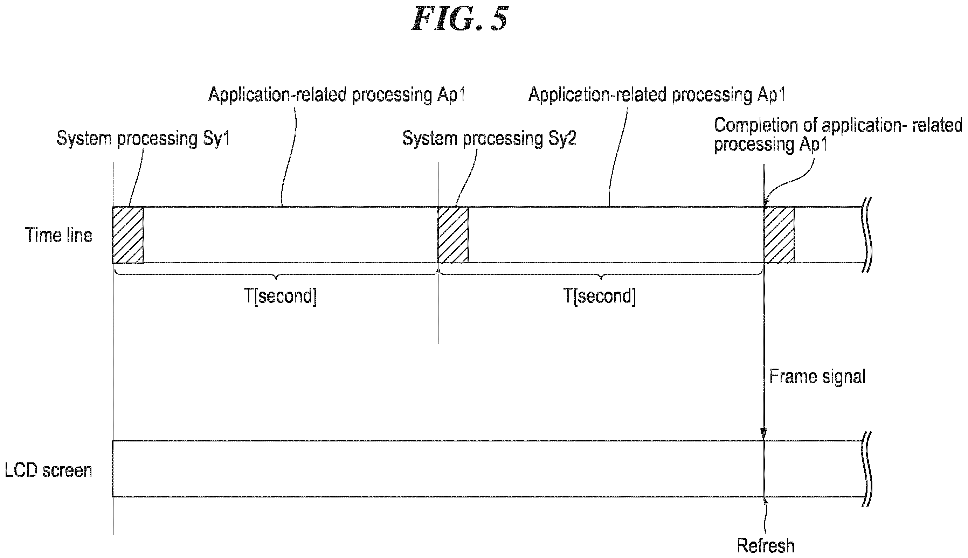

Figure 5 is a diagram showing an example of processing when application-related processing does not complete within a unit period. As shown in Figure 5, system processing Sy1 and application-related processing Ap1 are executed in the first unit period. If the application-related processing Ap1 is not complete, the image generation unit 14 starts the next unit period without sending a frame signal to the LCD screen 17. In other words, if the application-related processing Ap1 is not complete, the application-related processing Ap1 is temporarily interrupted, and the next unit period is started to continue the application-related processing Ap1 in the next unit period. In the next unit period, system processing Sy2 is executed, followed by the continuation of application-related processing Ap1. Here, system processing Sy2 may be different from system processing Sy1 or the same as system processing Sy1. When the application-related processing Ap1 is complete, the image generation unit 14 sends a frame signal to the LCD screen 17. As a result, the LCD screen 17 is refreshed, and the image data rendered by the application rendering processing is displayed on the LCD screen 17. The image generation unit 14 starts a new unit period after sending the frame signal.

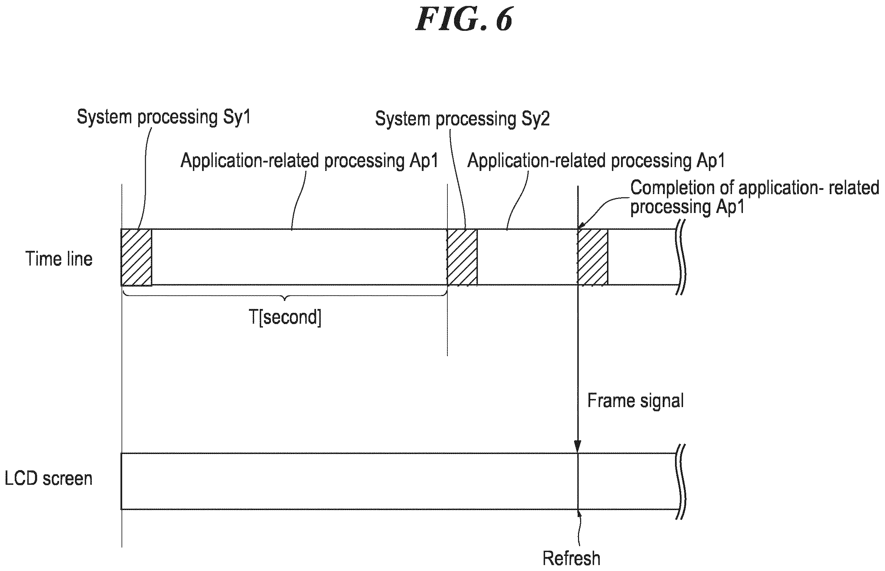

In the example shown in Figure 5, an example is given where application-related processing Ap1 ended simultaneously with the end of the second unit period. However, as shown in Figure 6, if the resumed application-related processing Ap1 ends in the middle of the next unit period, the image generation unit 14 sends a frame signal to the LCD screen 17 without waiting for the unit period to expire.

In either of the cases shown in Figures 5 and 6, when system rendering processing is executed among the system processing, the system rendering processing performed in the subsequent unit period becomes effective, and the system rendering processing performed in the previous unit period becomes invalid. In other words, the image generated by the system rendering processing in the previous unit period is not reflected on the LCD screen 17. In Figures 5 and 6, the application-related processing Ap1 is completed in two unit periods, but in some cases, application-related processing may be performed over three or more unit periods. In such cases, the system rendering processing performed in the last unit period becomes effective.

In addition, among the system processing, the processing related to the camera image may also become effective even if system processing other than the last executed system processing becomes effective. For example, camera image processing may be executed over multiple unit periods, such that camera image processing is interrupted in the first unit period and resumed from where it left off in the second unit period.

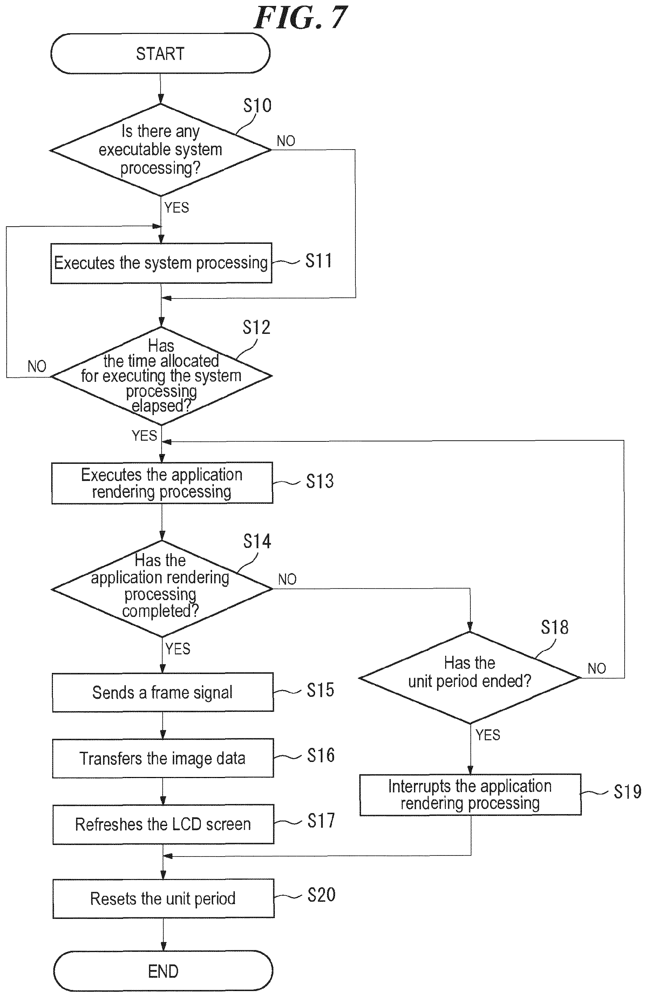

Figure 7 is a flowchart showing the processing flow of game apparatus 10. The image generation unit 14 of game apparatus 10 determines whether there is any executable system processing (S10). If there is an executable system processing (S10:YES), the image generation unit 14 executes the system processing from the start of the unit period (S11). If there is no system processing to be executed (S10:NO), the flow proceeds to a determination of whether the system processing allocation time has elapsed (S12). Note that if there is no system processing to be executed at this time, the system processing is not executed. Here, "no system processing" refers to cases such as when there are no notifications from other terminals and there are no processes related to camera images to be sent to other terminals.

The image generation unit 14 executes the system processing until the time allocated for executing the system processing within the unit period has elapsed (while S12 is determined to be NO). The time allocated for executing system processing includes, for example, the kT seconds from the start of the unit period as shown in Figure 2.

When the time allocated for executing system processing has elapsed (S12:YES), the image generation unit 14 executes the application rendering processing (S13). When the image generation unit 14 has completed the application rendering processing (S14:YES), the image generation unit 14 sends a frame signal to the LCD screen 17 (S15), and then the image output unit 15 transfers the image data to the LCD screen 17 (S16). The LCD screen 17 refreshes the display image using the image data received from the image output unit 15 (S17). The processing described here corresponds to the completion timing processing described above in Figure 3. Thereafter, the game apparatus 10 resets the unit period (S20) and terminates the processing.

If the application rendering processing has not been completed (S14:NO), the image generation unit 14 determines whether the unit period has ended (S18). If the unit period has not ended (S18:NO), the application rendering processing is continued (S13), and a determination is made as to whether the application rendering processing has been completed (S14).

If the unit period ends without the application rendering processing being completed (S18:YES), the application rendering processing is interrupted (S19), the unit period is reset (S20), and the processing for that unit period is terminated. By executing the operations shown in Figure 7 to the end, the processing for one unit period is completed. As described above, there are two cases in which processing ends: when the unit period ends (flow from S18) and when the application rendering processing is completed (flow from S14). In either case, the unit period is reset, and the game apparatus 10 executes the flow shown in Figure 7 from the beginning again.

The above describes the game apparatus 10, which is the information processing system 1 of the first embodiment. In the game apparatus 10 of this embodiment, since system processing and application-related processing are performed within the unit period in the processing of the image generation unit 14, system processing is executed at least once per unit period. Although the application rendering processing may take time, system processing can be executed at an appropriate timing even in such cases. If the application rendering processing is completed quickly, the LCD screen 17 is refreshed without waiting for the end of the unit period, enabling smooth screen display.

In this embodiment, a game apparatus and its processing method have been described. It should be noted that a program that performs scheduling to execute the above-described processing method in the image generation unit 14 and the image output unit 15 is also included in the scope of the present invention.

### (Second Embodiment)

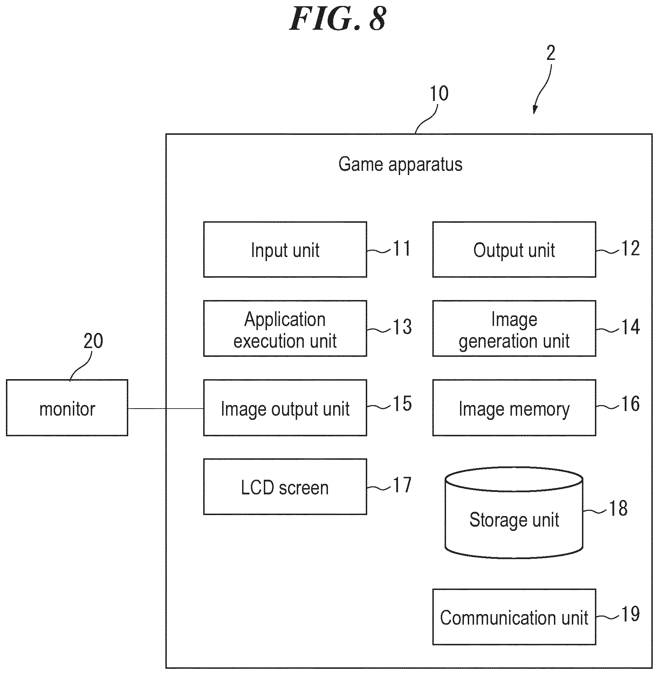

Figure 8 is a diagram showing the configuration of the information processing system 2 of the second embodiment. The information processing system 2 of the second embodiment includes a game apparatus 10 and a monitor 20. In the second embodiment, the game apparatus 10 is used in connection with an external monitor 20 such as a TV. The external monitor 20 supports VRR.

The basic configuration of the game apparatus 10 is the same as that of the game apparatus 10 of the first embodiment. The image output unit 15 of the game apparatus 10 in the second embodiment transmits image data to the external monitor 20 instead of the LCD screen 17. In addition, when the application rendering processing has been completed, the image generation unit 14 transmits a frame signal indicating that the rendering process is complete to the monitor 20.

In this way, even when the image display device is an external monitor 20 that supports VRR, the game apparatus 10 can execute system processing at an appropriate timing in the same manner as in the first embodiment.

Note that when the monitor 20 does not support VRR, even if a frame signal is transmitted, the frame is not refreshed, so the same processing as in the first embodiment of the game apparatus 10 (the processing shown in Figures 2 to 7) cannot be performed. The game apparatus 10 acquires EDID (Extended Display Identification Data) from the connected monitor 20, determines whether the monitor 20 supports VRR, and performs processing using a unit period when it is determined that the monitor 20 supports VRR.

### (Third Embodiment)

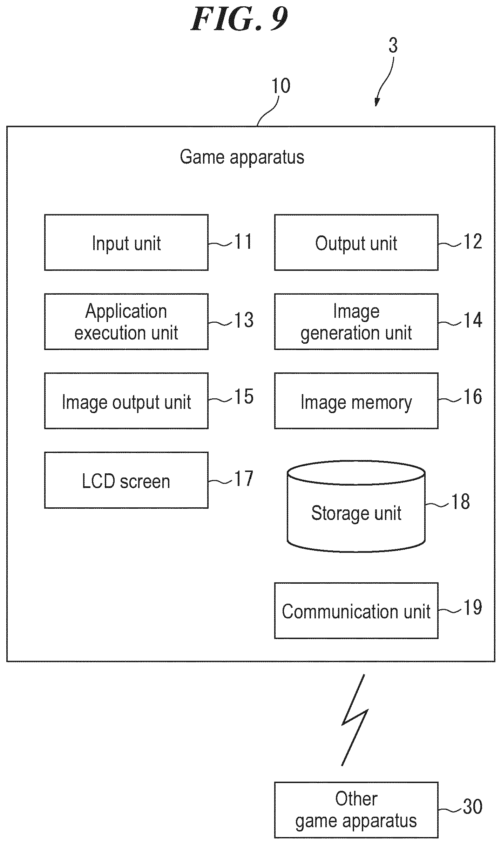

Figure 9 is a diagram showing the configuration of the information processing system 3 of the third embodiment. The information processing system 3 of the third embodiment is configured such that the game apparatus 10 is connected to other game apparatus 30 in a manner that allows communication between the game apparatus 10 and the other game apparatus 30. The basic configuration of game apparatus 10 is the same as that of game apparatus 10 described in the first embodiment. Other game apparatus 30 may be the same as game apparatus 10 described in the first embodiment or may have a different configuration. The connection between game apparatus 10 and other game apparatus 30 may be peer-to-peer communication or communication via a server.

In the information processing system 3 of this embodiment, game apparatus 10 and other game apparatus 30 can transmit and receive data related to the progress of the game and camera image data captured by the user. The camera image data is processed by the system.

Here, the camera processing will be explained. For example, if the unit period is 60 [fps] (T = 1/60 second), one camera processing may be divided into four system processing operations. In this case, the camera processing is performed at 15 [fps]. Note that if the application-related processing ends early, the system processing is performed ahead of schedule, so one frame of camera processing may be completed at a timing earlier than 15 [fps].

When other game apparatus 30 receive camera image data transmitted from game apparatus 10, the other game apparatus 30 displays the camera images on the LCD screen provided in game apparatus 30. If the game apparatus 30 is connected to an external display device such as a monitor, the other game apparatus 30 may display the received camera image on the external display device.

In this way, even when connected to other game apparatus 30 and performing system processing of camera image data for other game apparatus 30, camera processing is not executed at a rate slower than 15 [fps]. Note that although only one other game apparatus 30 is shown in Figure 9, there may be multiple other game apparatuses 30.

The above describes in detail embodiments of the information processing system of the present disclosure, but the information processing system of the present disclosure is not limited to the above embodiment.

In the above embodiment, a time is allocated for executing system processing within a unit period, and an example of executing application-related processing at the timing when the time allocated for system processing has elapsed has been described. However, if system processing has been completed early, the time allocated for system processing may be used for application-related processing.

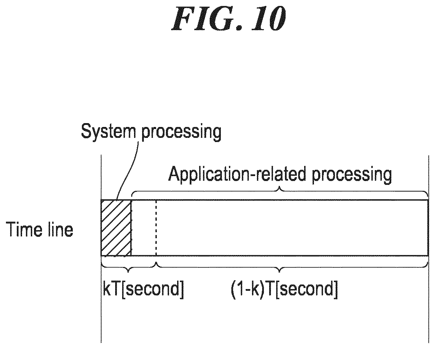

Figure 10 is a diagram showing scheduling in an information processing system according to a modified example. As shown in Figure 10, each unit period has a time allocated for system processing (kT seconds) and a time allocated for application-related processing ((1-k)T seconds). Therefore, as described in the above-described embodiment, the image generation unit 14 cannot execute system processing beyond the time allocated for system processing, and the system processing is terminated when the system processing allocation time ends.

On the other hand, as shown in the scheduling in Figure 10, if system processing has been completed before the end of the time allocated for the system processing, the information processing system according to the modified example executes application-related processing from the point at which system processing has been completed. Note that if there is no system processing to be executed at the start of the unit period, application-related processing starts immediately. With this configuration, there is no need to wait for the time allocated for the system processing to elapse after system processing has been completed, thereby reducing the time required to complete application-related processing and, consequently, improving the frame rate.

In the example shown in Figure 10, an example is described in which system processing was completed before the end of the time allocated for the system processing. However, the time allocated for the system processing and the time allocated for application-related processing may be changed depending on the execution state of the application. For example, when the amount of application-related processing is small, such as when the application is not running or is running in the background, the time allocated for the system processing per unit period may be increased.

In the above embodiment, the order of processing within a unit period is described as system processing followed by application-related processing, but the order of processing may be reversed, with application-related processing first and system processing second.

In the above embodiment, an example was described in which the time allocated for application-related processing is longer than the time allocated for system processing, but the time allocated for system processing may be longer than the time allocated for application-related processing.

In the above embodiment, an example was described in which two processes, system processing and application-related processing, are executed within a unit period, but three or more processing may be executed within a unit period.

### Description of Reference Numerals

- 1,2,3: Information processing system
- 10: Game apparatus
- 11: Input unit
- 12: Output unit
- 13: Application execution unit
- 14: Image generation unit
- 15: Image output unit
- 16: Image memory
- 17: LCD screen
- 18: Storage unit
- 19: Communication unit
- 20: Monitor
- 30: Other game apparatus

## Claims

1. An information processing system, comprising:
a memory configured to store an application program, and at least one processor configured to execute the application program to perform operations comprising:
generating an image, the image generation including:
sequentially performing, within a first unit period, (i) first processing based on processing data at a first timing, and (ii) second processing including application rendering processing based on execution of the application program; and
interrupting the second processing based on the second processing being incomplete within the first unit period, and sequentially performing (i) the first processing based on the processing data at a second timing later than the first timing, and (ii) continuing the interrupted second processing within a second unit period following the first unit period; and
outputting the generated image to a display screen without waiting for the expiration of the unit period, based on at least the second processing being completed.

2. The information processing system according to claim 1, wherein:
the processing data is updated based on execution results of system processing different from the application program;
the first processing includes system rendering processing corresponding to the results of the system processing; and
outputting the generated image to the display screen without waiting for the expiration of the unit period, based on both the system rendering processing and the second processing being completed.

3. The information processing system according to claim 2, wherein:
the information processing system includes an information processing device that is capable of communicating with other information processing devices and that has the display screen; and
the at least one processor configured to execute the application program to perform operations comprising:
performing the first processing including transmission processing; and
transmitting information based on the execution of the transmission processing to the other information processing device; wherein an image based on the execution of the transmission processing is not output to the display screen of the information processing system, but is output to the display screen of the other information processing devices.

4. The information processing system according to claim 1, wherein the first processing is performed before the second processing in the unit period.

5. The information processing system according to claim 4, wherein the second processing is not performed until a predetermined time has elapsed since the start of the execution of the first processing.

6. The information processing system according to claim 4, wherein:
the first processing is completed when either a processing completion condition is satisfied or a predetermined time has elapsed since the start of the execution of the first processing; and
the second processing is executed without waiting for the predetermined time to elapse, based on the first processing being completed by the satisfaction of the processing completion condition.

7. The information processing system according to claim 1, wherein a length of the unit period is determined according to the application program executed.

8. The information processing system according to claim 1, wherein:
the information processing system includes an information processing device and a display device;
the information processing device includes the application execution unit, the image generation unit, and the image output unit; and
the display device includes the display screen.

9. An information processing method in an information processing system including an application execution unit that executes an application program, an image generation unit that generates an image, and an image output unit that outputs the image generated by the image generation unit to a display screen, the information processing method comprising:
sequentially performing, by the image generation unit within a first unit period, (i) first processing based on processing data at a first timing, and (ii) second processing including an application rendering processing based on execution results by the application execution unit;
interrupting the second processing, based on the second processing being incomplete within the first unit period and sequentially performing, within a second unit period following the first unit period, (i) the first processing based on processing data at a second timing later than the first timing, and (ii) continuing the interrupted second processing; and
outputting the image to the display screen by the image output unit, based on at least the second processing being completed, without waiting for the expiration of the unit period.

10. A program to be executed by an information processing system comprising an application execution unit that executes an application program, an image generation unit that generates an image, and an image output unit that outputs the image generated by the image generation unit to a display screen, the program causing the information processing system to:
sequentially perform, by the image generation unit within a first unit period, (i) first processing based on processing data at a first timing, and (ii) second processing including an application rendering processing based on execution results by the application execution unit;
interrupt the second processing, based on the second processing being incomplete within the first unit period and sequentially perform, within a second unit period following the first unit period, (i) the first processing based on processing data corresponding to a second timing later than the first timing, and (ii) continuing the interrupted second processing; and
output the image to the display screen by the image output unit, based on at least the second processing being completed, without waiting for the expiration of the unit period.
